Europäisches Patentamt

European Patent Office

Office européen des brevets

(11) Publication number: **0014074**
A1

# (12) EUROPEAN PATENT APPLICATION

(21) Application number: 80300159.3

(22) Date of filing: 17.01.80

(51) Int. Cl.³: **B 60 T 17/22**, F 16 D 66/02

(30) Priority: 30.01.79 GB 7903268

(43) Date of publication of application: 06.08.80
Bulletin 80/16

(84) Designated Contracting States: DE FR GB IT SE

(71) Applicant: LUCAS INDUSTRIES LIMITED, Great King
Street, Birmingham, B19 2XF (GB)

(72) Inventor: Williams, David Gordon, 7, Woodville Road,
Harbourne, Birmingham (GB)

(74) Representative: Prutton, Roger et al, MARKS & CLERK
Alpha Tower A.T.V.Centre, Birmingham B1 1TT (GB)

(54) Brake pad wear detection system.

(57) A combined brake pad wear and fluid level detection
system comprises four sensor loops (18, 20), (21, 22) emb-
edded respectively in four brake pads (16) and connected
in series with resistors (R1, R2), between lines (26, 30). A
switch (24) operated by a float positioned in the brake fluid
reservoir is connected in parallel with the resistor (R1). A
pair of comparators (32, 34) detect the voltage at the junc-
tion of resistor (R2) and loop (18) and drive an indicator
lamp (40) through a delay circuit (D4, R8, C2), a further
comparator (38), and a transistor (T1). A switch (42) oper-
ated by hand brake (43) is also connected in series with a
lamp (40). The lamp (40) is energised during each braking
operation when the wear to one of the brake pads (16) has
reached its working limit (19), the delay circuit (R8, C2,
D4) preventing such energisation at other times. On break-
age of one of the sensor loops, or upon closure of the
switch (24), or upon operation of the handbrake (43), the
lamp (40) is energised permanently.

EP 0014074 A1

0014074

The present invention relates to a brake pad wear detection system which includes a sensor loop embedded in a brake pad, the sensor loop being broken when the wear to the pad reaches the working limit.

In our co-pending published European Patent Application No. 0002376, there is described a brake pad wear detection system comprising a brake having a brake pad and a conductive braking face, the brake pad and the conductive braking face engaging during braking, a sensor loop embedded in the brake pad and positioned to be broken when the wear to the brake pad exceeds the working limit, an indicator means and a detecting means, the detecting means operating the indicator means upon contact between the braking face and the sensor loop or upon breakage of the sensor loop.

In road vehicles, it is usual for a brake pad and an associated braking face to be engaged by a fluid operating braking system and, in addition to providing an indication of brake pad wear, it is desired also to provide an indication of the level of fluid in the brake fluid reservoir.

Accordingly, it is an object of the present invention to provide a detection system which also provides an indication of the level of fluid in the brake fluid reservoir.

According to one aspect of the present invention there is provided a combined brake pad wear and brake fluid level detection system comprising a brake pad and a conductive braking face, the brake pad and the conductive braking face being engaged during braking by a fluid operated braking system, and the fluid being supplied from a brake fluid reservoir, a sensor loop embedded in the brake pad and positioned so as to be broken when the wear to the brake pad exceeds the working limit, an indicator means, and a detecting means which operates the indicator means upon breakage of the sensor loop, characterised in that there is further provided a switch means connected in series for the sensor loop and operated by a float mounted in the brake fluid reservoir, the switch means being in a first state when the fluid is above a predetermined level and in a second state when the fluid is below the predetermined level, the detecting means also operating the indicator means when the switch means is in said second state.

By connecting the switch means operated by the float mounted in the brake fluid reservoir in series with the sensor loop, an indication is also provided as a level of fluid in the brake fluid reservoir.

In the detection system of our pending Application mentioned above, when the wear to the pad is approaching the working limit and the sensor loop has been exposed but not yet broken, the indicator means will be operated temporarily during each operation of the brake, thereby providing a warning that the wear is approaching the working limit, and, when the sensor loop has broken, the indicator means will be operated permanently. Thus, a progessive warning of pad wear is provided. However, when the loop has been exposed but not yet broken, there is a danger that the loop and braking face may engage repetitively at times other than during braking due to movement of the vehicle in which the brake is installed, and consequently the indicator means will be repetitively operated and may cause irritation to the driver of the vehicle.

It is another object of the present invention
to provide a system in which this problem is overcome
or reduced.

According to a further aspect of the
present invention there is provided a brake pad wear
detection system comprising a brake having a brake pad
and a conductive braking face, the brake pad and the
conductive braking face engaging during braking, a
sensor loop embedded in the brake pad and positioned
so as to be broken when the wear to the brake pad
exceeds the working limit, an indicator means, and
a detecting means responsive to the sensor loop,
the detecting means operating the indicator means upon
contact between the braking face and the sensor loop
and upon breakage of the sensor loop, and characterised
in that there are provided means for delaying operation
of the indicator means for a predetermined period
upon contact between the braking face and the sensor
loop.

By providing the delaying means, operation
of the indicator means upon contact between the loop
and braking face at times other than during braking
is avoided.

The present invention will now be
described in more detail, by way of example, with reference
to the accompanying drawings in which:

Figure 1 is a diagram of a conventional fluid operated braking system;

Figure 2 is a circuit diagram of a combined brake pad wear and brake fluid level protection system applied to the conventional braking system shown in Figure 1; and

Figure 3 is a diagramatic cross-sectional view of the brake fluid reservoir of the braking system shown in Figure 1.

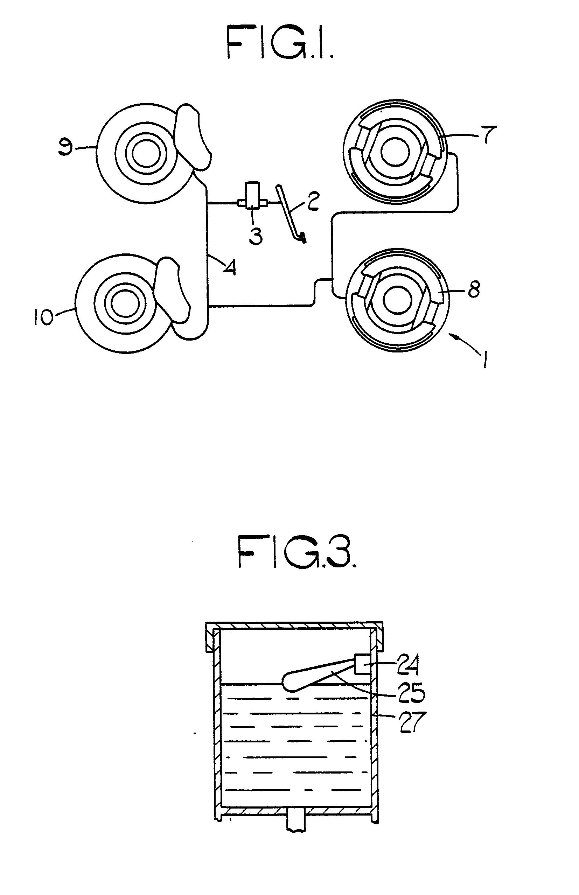

Referring now to Figure 1, there is shown a conventional fluid operated braking system 1, comprising a brake pedal 2 operatively connected to a master cylinder 3 which supplies fluid under pressure during braking through hydraulic pipes 4 to two conventional drum rear brakes 7 and 8 and also to two conventional disc front brakes 9 and 10. The braking system is installed in a road vehicle, not shown.

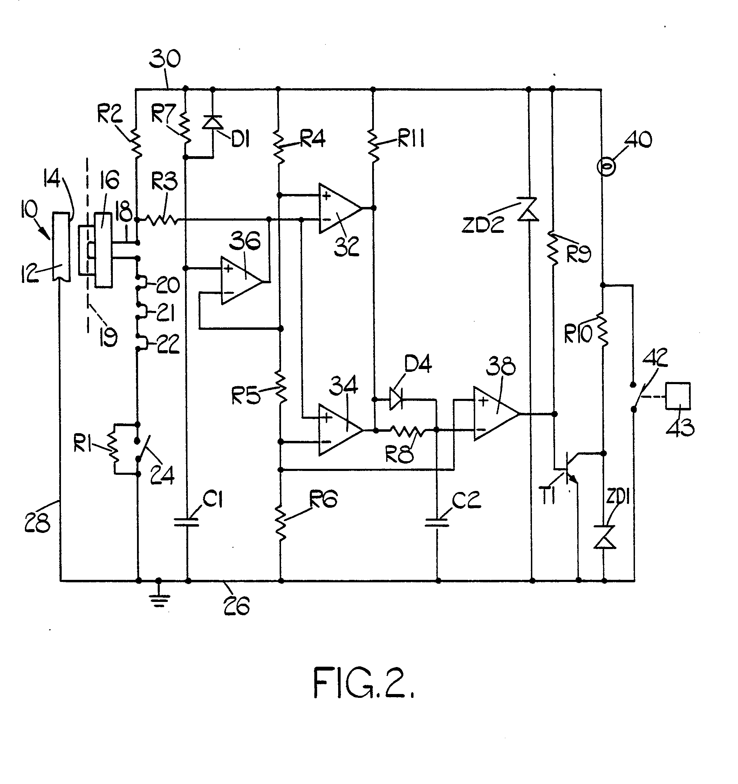

Referring now to Figure 2, there is shown a brake pad wear detection system used with the braking system shown in Figure 1. In Figure 2, the disc brake 10 is shown diagramatically and, for simplicity, the remaining three brakes are not shown. The brake 10 includes a metal braking member in the form of a disc 12 having a conductive braking face 14 and a brake pad 16 mounted to engage the face 14 under pressure during braking.

In order to detect wear to the pad 16 it is provided with a sensor loop 18 positioned at the normal working limit, indicated by a dashed line 19. The loop 18 is connected in series with loops 20, 21 and 22 embedded in the brake pads of the other three brakes.

The loop 22 is connected through a normally open switch 24, and a resistor R1 connected in parallel with the switch 24, to an earth line 26. As shown in Figure 3, the switch 24 is mounted in a brake fluid reservoir 27 forming part of the master cylinder 3 and is operated by a float 25. The arrangement is such that the switch is open when the fluid is above a predetermined level and closes when the fluid falls below this predetermined level. The braking member 12 is connected to the earth line 26 as indicated diagramatically by the line 28 though in practice this connection will be made through parts of the brake 10 and the vehicle body. The end of the sensor loop 18 remote from the loop 20 is connected through a resistor R2 to a positive supply line 30.

The junction of resistor R2 and loop 18 is connected to a detecting means which includes a resistor R3 connecting this junction to the invert input of a comparator 32 and to the non-invert input of a comparator 34. The positive supply line 30 is connected through three resistors R4, R5 and R6, connected in series, to the earth line 26, these three resistors functioning as a potential divider. The common point of resistors R4 and R5 is connected to the non-invert input of comparator 32 and the common point of resistor R5 and R6 is connected to the invert input of comparator 34. The positive supply line 30 is also connected through a resistor R7 and a capacitor C1, connected in series, to the earth line 26, and the junction of resistor R7 and capacitor C1 is connected to the anode of a diode D1, the cathode of which is connected to the line 30. The junction of resistor R7 and capacitor C1 is also connected to the non-invert input of a comparator 36, the invert input of which is connected to the junction of resistors R4 and R5 and the output of which is connected to the invert input of comparator 32. The outputs of comparators 32 and 34 are connected together through a resistor R11 to line 30, and the outputs of the comparators 32 and 34 form the output of the detecting means.

The output of the detecting means is connected to a delay means comprising a resistor R8 and capacitor C2 connected, in series, between the output of comparators 32 and 34 and the earth line 26, and a diode D4 connected in parallel with a resistor R8 with its cathode connected to the capacitor C2.

The junction of resistor R 8 and capacitor C2 is connected to the invert input of a comparator 38, the non-invert input of which is connected to the junction of resistors R5 and R6. The output of comparator 38 is connected through a resistor R9 to line 30 and also to the base of an NPN transistor T1, the emitter of which is connected to line 26 and the collector of which is connected through a resistor R10, and an indicator lamp 40, connected in series, to line 30. The collector of transistor T1 is also connected to the cathode of a zener diode ZD1, the anode of which is connected to line 26. Zener diode ZD1 functions to protect the transistor T1. A common point of resistor R10 and lamp 40 is connected through a switch 42 to line 26. This switch 42 is associated with the conventional hand brake 43 of a vehicle and is arranged to close when the hand brake is engaged. Finally, line 30 is connected to the cathode of a zener diode ZD2, the anode of which is connected to line 26, this zener diode functioning to protect the circuit from transient over voltages which may appear on line 30.

The values of resistors R4, R5 and R6 are chosen so that normally the voltage of the common point of resistors R4 and R5 is greater than the voltage of the junction of resistor R2 and loop 18, and so that the voltage at the junction of resistors R5 and R6 is normally less than the voltage of the junction of resistor R2 and loop 18.

The four comparators 32, 34, 36 and 38 comprise a National Semi-Conductor integrated circuit LM2901 it is to be noted that the comparators of this integrated circuit have open collector output stages.

The operation of the system will now be described.

When the system is initially energized, the capacitor C1 will be discharged with a result that the output of comparator 36 will be low thereby rendering the output of comparator 34 low, the output of comparator 38 open circuited, transistor T1 conductive and thereby energizing lamp 40. Lamp 40 will continue to be energized until capacitor C1 is charged to a potential greater than the potential at the common point of resistors R4 and R5 thereby providing an indication that the lamp is working.

After this initial period, providing the pads are new or not sufficiently worn to expose their sensor loops 18, 20, 21 and 22, and also providing the fluid in the brake fluid reservoir 27 is above the predetermined level so that the switch 24 is open, the outputs of both comparators 32 and 34 will be open circuited and so capacitor C2 will charge through resistor R11 and diode D4. Consequently the output of comparator 38 will be low thereby rendering the transistor T1 non-conductive
and the lamp 40 de-energised. When the wear to one of the
pads has progressed sufficiently far to expose its sensor
loop, the loop will be earthed as a result of contact to
the braking face 14 during each operation of the brake
10. This will render the output of comparator 34
low and so capacitor C2 will discharge through resistor
R8. When the potential across capacitor C2 has fallen
below the potential of the junction of resistors R5 and
R6, the output of comparator 38 will be open circuited
thereby rendering transistor T1 conductive and lamp 40
energised. Lamp 40 will then continue to be energised
until the end of the braking operation thereby providing
an indication of the wear that has occurred.
It is to be noted during each braking operation, energisation
of the lamp 40 is delayed for a predetermined period
determined by resistor R8 and capacitor C2. As a
consequence of this delay, if the braking face 40 and
sensor loop 18 come into contact momentarily, for example
as a result of movement of the vehicle, then such contact
should not cause energisation of the lamp 40 and consequent
irritation to the driver of the vehicle.

When one of the loops 18, 20, 21 or 22
is broken, then the output of comparator 32 will go low,
the capacitor C2 will discharge through resistor R8,
the output of comparator 38 will be open circuited, the
transistor T1 will be rendered conductive and consequently
the lamp 40 will be permanently energised thereby
providing an indication that one of the loops has been
broken and of the wear that has occurred.

0014074

Also, if the level of fluid in the
brake fluid reservoir 27 falls below the predetermined
level, then switch 24 will be closed with the result that
the output of comparator 34 will be low, thereby
energising lamp 40. Thus, in this system, the same circuit
is used to provide an indication of wear to the pads and also
of a low level in the brake fluid reservoir.

Also, each time the hand brake 43 of the
vehicle is engaged, the switch 42 will be closed, and this
will also cause energisation of the lamp 40 and provide
the driver with an indication that he has engaged
the hand brake.

In a modification to the circuit shown
in Figure 2, the resistor R1 and the switch 24 are connected
in series between loop 22 and the earth line 26.
With this modification, the switch 24 is arranged so that
it is open when the fluid in the reservoir 27 is below
the predetermined level and closed when it is above
this level.

0014074

## Claims:-

1.          A combined brake pad wear and brake fluid
level detection system comprising a brake (10) having
a brake pad (16) and a conductive braking face (12),
the brake pad (16) and the conductive braking face (12)
being engaged during braking by a fluid operated braking
system (1) and the fluid being supplied from a brake
fluid reservoir (27), a sensor loop (18) embedded in the
brake pad (16) and positioned so as to be broken when the
wear to the brake  pad (16) exceeds the working limit,
an indicator means (40), and a detecting means (32, 34)
which operates the indicator means (40) upon breakage
of the sensor loop (18), characterised in that there is further
provided a switch means (24) connected in series with
the sensor loop (18) and operated by a float (25) mounted
in the brake fluid reservoir ( 27), the switch means (24)
being in a first state when the fluid is above a
predetermined level and in a second state when
the fluid is below the predetermined level, the detecting
 means (32, 34) also operating the indicator means (40)
when the switch means (24) is in said second state.

2.          A detection system as claimed in claim 1
characterised in that the sensor loop (18) is
connected in series between the two resistors (R1, R2),
the resistors (R1, R1) being connected between two
supply lines (26, 30), the switch (24) being connected
in parallel with one (R1) of said resistors, and the
detecting means (32, 34) being responsive to the junction
of the sensor loop (18) and the other (R2) of said
resistors.

0014074

3.     A detection system as claimed in claim
2 in which the detecting means comprises a first
comparator (32) for comparing the voltage of said junction
with a first reference voltage and a second comparator (34)
for comparing the voltage at said junction with a second
reference voltage.

4.     A brake pad wear detection system comprising a
brake (10) having a brake pad (16) and a conductive
braking face (14), the brake pad (16) and the conductive
braking face (14) engaging during braking, a sensor loop
(18) embedded in the brake pad (16) and positioned
so as to be broken when the wear to the brake pad
(16) exceeds the working limit, an indicator means (40),
and a detecting means (32, 34) responsive to the sensor
loop (18), the detecting means (32, 34) operating the
indicator means (40) upon contact between the braking
face (14) and the sensor loop (18) and upon breakage of
the sensor loop (18), and characterised in that there are
further provided means (R8,D4,C2) for delaying operation of
the indicator means (40) for a predetermined period upon
contact between the braking face (14) and the sensor
loop (18).

5.     A brake pad wear detection system as claimed
in claim 4 characterised in that the delay means comprises
a resistor (R8) and a capacitor (C2) connected in series
across the output of the detecting means (32, 34), and
a diode (D4) connnected in parallel with the
resistor (R8), the potential at the junction of the
resistor (R8) and the capacitor (C2) controlling the
operation of the indicator means (40).

6.  A brake pad wear detection system as claimed in claim 4 or claim 5 in which the sensor loop (18) is connected in series between two resistors (R1, R2,) the two resistors (R1, R2) being connected between two voltage supply lines (26, 30).

7.  A brake pad wear detection system as claimed in claim 6 in which the detecting means comprises a first comparator (32) for comparing the voltage at said junction with a first reference voltage and a second comparator (34) for comparing the voltage at said junction with a second reference voltage.

# FIG.I.

# FIG.3.

0014074

FIG.2.

European Patent Office

**EUROPEAN SEARCH REPORT**

0014074

Application number

EP 80 30 0159

## DOCUMENTS CONSIDERED TO·BE RELEVANT

| Category | Citation of document with indication, where appropriate, of relevant passages | Relevant to claim |
|---|---|---|
| | DE - B - 1 655 400 (TEVES)<br>* whole document * | 1 |
| | GB - A - 1 516 311 (DELPHIC)<br>* whole document * | 1-3 |
| | US - A - 3 675 197 (BENNETT et al.)<br>* fig. 7 * | 2 |
| A | DE - A1 - 2 546 084 (WEILAND) | |
| A | US - A - 4 088 980 (TANIGAWA et al.) | |

**CLASSIFICATION OF THE APPLICATION (Int. Cl.³)**

B 60 T   17/22
F 16 D   66/02

**TECHNICAL FIELDS SEARCHED (Int.Cl.³)**

B 60 T   17/00
F 16 D   66/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 17-03-1980 | LUDWIG |

EPO Form 1503.1   06.78